# EUROPEAN PATENT APPLICATION

(11) **EP 2 595 302 A1**
(43) Date of publication of application: **22.05.2013**
(21) Application number: 11189931.6
(22) Date of filing: 21.11.2011
(51) Int. Cl.: H02M 7/49, H02M 1/32

(54) **Method and device for servicing individual power module during operation of a modular multicell converter**

(71) Applicant: ABB Technology AG, 8050 Zürich (CH)
(72) Inventor: Cottet, Didier, 8050 Zürich (CH); Riedel, Gernot, 5406 Baden-Rütihof (CH); Kalland, Lars, 1344 Haslum (NO)
(74) Representative: ABB Patent Attorneys

(57) **Abstract**

A method of maintaining a power module (20) of a power electronics device (10), the power electronics device (10) comprising a plurality of power modules (20), comprises the following steps: switching to a service mode of the power module (20) by activating a bypass element (42) of the power module (20) such that the power module (20) is bypassed and by redistributing an operation voltage and/or current to other power modules (20) of the plurality of power modules (20); performing a maintenance action on the power module (20); and switching to a normal mode of the power module (20) by deactivating the bypass element (42) and by redistributing the operation voltage and/or current back to the power module and the other power modules.

## Description

### FIELD OF THE INVENTION

The invention relates to the field of power electronics. In particular, the invention relates to a method, a computer program and a computer-readable medium for maintaining a power module of a power electronics device, as well as a power module and a power converter.

### BACKGROUND OF THE INVENTION

Many power electronics devices comprises equally designed power modules with power semiconductors. For redundancy and for the distribution of the power, the operation voltage and/or the operation current of the power electronics device may be distributed among the power modules.

Examples for such power electronics devices are medium voltage power electronics converters and drives that use modular approaches for the circuit topology and for the hardware construction.

Such devices may provide a minimal redundancy to allow full or partial operation when one or more power modules of the power electronics device are not operating. This is typically the case for M2LC (Modular Multi Level Converter) based converters. Series connected M2LC cells (which may be half bridges or H-bridges) may form phase branches of the M2LC converter. The M2LC cells may provide the basic redundancy units. Several additional cells can be added to increase the level of redundancy.

For power converters in general, several maintenance or service functions usually exist, which typically may only be performed when the power converter is not operating. Examples for such functions are software/firmware updates of controllers, diagnostics functions to test functionality or condition of specific parts, and hardware replacement of specific parts.

These maintenance actions and functions are either performed during operation breaks or are reduced in functionality such as to be performed during operation.

### DESCRIPTION OF THE INVENTION

It is an object of the invention to lower the maintenance time of a power electronics device.

This object is achieved by the subject-matter of the independent claims. Further exemplary embodiments are evident from the dependent claims and the following description.

An aspect of the invention relates to a method of maintaining a power module of a power electronics device. The power electronics device, for example a power converter, may comprise a plurality of power modules. The plurality of power modules, and in particular the power module to be maintained, may be connected in series to form a branch of the power converter. For example, this may be the case for a M2LC converter. The power modules of the plurality of power modules may be electrically connected in series to a bus bar for supplying the main power to the power modules. Each power module may be associated with a bypass element that is adapted for bypassing the power module, for example in such a way that other power modules of a branch remain connected in series, when the respective power module is not operating or is removed.

According to an embodiment of the invention, the method comprises the steps of: switching to a service mode of the power module by activating a bypass element of the power module such that the power module is bypassed and by redistributing an operation voltage and/or current to other power modules of the plurality of power modules; performing a maintenance action or maintenance function on the power module in the service mode; and switching to a normal mode of the power module by deactivating the bypass element and by redistributing the operation voltage and/or current back to the (maintained) power module and the other power modules.

In other words, the power module may be adapted for switching into a service mode in which the power module may be maintained or serviced, while the remaining power modules of the power electronics device are still operating.

For example, a power module may be switched into a service mode in order to perform maintenance functions or service functions that may not be performed while the power module is operating (for example software/firmware uploads, self tests, diagnostics, module replacement, etc.).

According to an embodiment of the invention, activating the bypass element comprises short-circuiting a bus bar, such that the other power modules remain connected in series. Switching the power module to the service mode may require to bypass the power circuit

(for example comprising M2LC cells) of the power module and may require to provide auxiliary power to the power module independently from the power supplied to the power circuit.

The maintenance actions or functions may be performed while the power electronics device is operating. The power electronics device need not be stopped from operating when maintaining one of the power modules. Thus the power electronics device may have maximal availability, which may mean that the power electronics device is adapted to continuously operate, even in the case of maintenance. No maintenance breaks and no scheduled down-times for condition checks may have to be performed. Software and hardware upgrades may be performed with seamless operation.

According to an embodiment of the invention, redistributing the operation voltage comprises redistributing a branch voltage of a branch of a power converter to the other power modules. For example, the redundancy of the power converter with respect to the power modules may be used to bring one (or more) redundant module(s) into a service mode. In the M2LC case that may mean to bring for example one M2LC cell into service mode through bypassing it using the bypass element associated with the power module.

Before bypassing the power module, the local controller of the power module may however first discharge the cell capacitors and redistribute the branch voltage among the remaining power modules. To bring the power module back to normal operation, the bypass element may be released, i.e. opened, the cell capacitor may be re-charged and the branch voltage may be re-distributed among all power modules.

As examples, during the service mode, following maintenance functions and actions may be executed on the power module: Uploading new software/firmware to the local controller; performing a module diagnostic routine such as the Multi-Level Power Consumption Monitoring of PCBAs; and/or physically removing the power module to perform hardware service actions (such as preventive maintenance/parts replacement) or to replace the entire power module with a new one.

According to an embodiment of the invention, the maintenance action comprises executing a diagnostic function, uploading and/or downloading data, modifying data. The uploaded data may be diagnostics and/or monitoring data. The downloaded data may be software/firmware that may be upgraded. The modified data may be a control parameter.

According to an embodiment of the invention, the maintenance action comprises executing a diagnostic function. In the service mode, the power module may perform diagnostics (self-)tests, which may not be performed while in normal mode. In this case, the power module may stay in service mode, when the diagnostics tests have found a failure.

According to an embodiment of the invention, the maintenance action comprises upgrading software/firmware. Software and /or firmware updates/upgrades may be installed on the power module in service mode, which cannot be uploaded or installed while in normal mode.

According to an embodiment of the invention, the maintenance action comprises waiting for the power module to be replaced, for example by a human operator or a robot. As maintenance action, a human operator may replace the power module in service mode, while the power electronics device is operating. The power module in service mode may be removed and reentered, or replaced with another similar or identical power module. Also components of the power module may be replaced. The power module to be reconnected with the power electronics device may wait until it is connected to the power electronics device, before it starts to switch to normal operation mode.

According to an embodiment of the invention, the switching to the service mode is triggered by a human operator, i.e. the service mode may be activated manually. For example, the human operator may execute a command in a local controller of the power module to switch to service mode.

According to an embodiment of the invention, the switching to the service mode is automatically triggered, for example time scheduled. The service mode may be automatically activated in a chosen time interval. For example, the power module (and in particular its local controller) may start a self-test of the power module in regular time-intervals.

According to an embodiment of the invention, the switching to the service mode comprises activating an auxiliary power supply and switching to the normal mode comprises deactivating the auxiliary power supply. Switching the power module to the service mode may require providing auxiliary power to the power module independently from the main power supplied to the power circuit. A power module in service mode may remain being powered through an auxiliary power source, which is independent of the main power. The power module may then even be disconnected from the bus bar without the loss of the power supply of components of the power module. The power module may have an independent auxiliary power supply allowing to keep components of the power module, for example control-, gate driving-, communication- and diagnostic electronics operating, even in the case when the power module is disconnected from the power circuit of the power electronics device.

However, it may be also possible that an auxiliary power supply is always on during the normal mode and the service mode.

An aspect of the invention relates to a method for maintaining a power electronics device. Not only one power module, but a plurality of power modules may be maintained with the method as described in the above and in the following.

According to an embodiment of the invention, the method as described in the above and in the following may be sequentially performed for more than one power module. For example, the switching to service mode, the maintenance action and the switching back to normal mode may be performed for all power modules of the power electronics device in a given sequence one after the other. It is also possible, that the power modules are switched to service mode simultaneously in groups, when more than one power module can be in service mode at a time.

The service mode may be sequentially applied to all power modules of a converter, one after the other. This may be performed in the following cases: uploading software/firmware for the full converter; uploading of an improved control algorithm to all local power module controllers; performing full converter self-diagnostics in regular time intervals for early failure recognition and prevention; and/or upgrade an 'old' converter with 'new' hardware (for example with lower loss IGBTs, higher reliability capacitors, improved cell architecture, new cooling system, etc.).

An aspect of the invention relates to a computer program for maintaining a power module of a power converter, which, when being executed by at least one processor, is adapted to carry out the steps of the method as described in the above and in the following.

Such a computer program may comprise an algorithm to bring a power module into bypass (service) mode and to perform maintenance actions (for example software and/or hardware diagnostics) before bringing the power module back to normal operation. Such a computer program may be performed by a processor of a local controller of the power module.

The computer program may also comprise an algorithm to perform sequential maintenance actions (for example software and/or hardware diagnostics) for all converter modules, either in a triggered way or in a fully automatic, scheduled way. For example, this algorithm may be performed by a main controller of the power electronics device and local controllers of the power modules. The main controller of the power converter and local controllers of the power modules may comprises processor, which may execute such a computer program.

An aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), a FLASH memory and an EPROM (Erasable Programmable Read Only Memory). A computer readable medium may also be a data communication network, e.g. the Internet, which allows downloading a program code.

An aspect of the invention relates to a power module for a power electronics device. Such a power module may comprise local controller for performing the method as described in the above and in the following.

According to an embodiment of the invention, the power module comprises at least one power cell with power semiconductor switches and/or a power capacitor. For example, the power module may comprise a M2LC cell.

According to an embodiment of the invention, the power module comprises at least two terminals for electrically connecting the at least one power cell with a bus bar of the power electronics device. For example, the power module may be designed like a cartridge that may be plugged into the bus bar.

According to an embodiment of the invention, the power module comprises a bypass element for short-circuiting the two terminals, allowing disconnecting the internal power circuit from the main circuit of the power electronics device. For example, the bypass element may be a mechanical or electromechanically switch that is situated in the power module. The power module may comprise an internal bypass element or switch.

However, a bypass element may also be situated in the power electronics device, such that the bus bar is not interrupted, when the power module is removed from the power electronics device. The power electronics device and the bypass element may be constructed in such a way that the power module may be removed from the power electronics device during operation.

According to an embodiment of the invention, the power module comprises at least two power cells connected in series and at least two bypass elements for short circuiting each power cell. The power module may comprise one or more M2LC cells and bypass elements at cell level or at module level.

Summarized, the power module may comprise power electronics, for example a M2LC cell, a bypass element and an independent auxiliary power supply and may be adapted to to perform service actions in autonomous mode or in remote controlled mode with a local controller.

An aspect of the invention relates to a power converter, for example an indirect, direct or chain link converter.

According to an embodiment of the invention, the power converter comprises at least one branch of series connected power modules as described in the above and in the following. For example, in an indirect converter, two branches may interconnect two inputs of the power converter with an output of the power converter.

The power converter may further comprise a main controller for controlling the power modules. For example in an indirect converter, a DC voltage between the two inputs is converted into an AC voltage at the output.

According to an embodiment of the invention, the power converter is adapted to perform the method as described in the above and in the following. The power converter may comprise a power conversion circuit with a minimum level of redundancy where one or more redundant power modules may be switched to a service mode while keeping the remaining circuit operating at full or reduced capabilities. For example, the power converter may be a M2LC based converter that provides redundancy at single or multiple cell level.

It has to be understood that features of the power module and the power electronics device, for example the power converter, as described in the above and in the following may be features of the method as described in the above and in the following and vice versa.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig.1 schematically shows a power electronics device according to an embodiment of the invention.
Fig. 2 shows a circuit diagram for a unipolar power cell for the power electronics device of Fig. 1.
Fig. 3 shows a circuit diagram for a bipolar power cell for the power electronics device of Fig. 1.
Fig. 4 schematically shows a power module according to an embodiment of the invention.
Fig. 5 schematically shows a power module according to a further embodiment of the invention.
Fig. 6 shows a flow diagram for a method for maintaining a power electronics device according to an embodiment of the invention.

In principle, identical parts are provided with the same reference numerals in the figures.

### DETAILED DESCRIPTION OF EXEMPLARY EMBODIMENTS

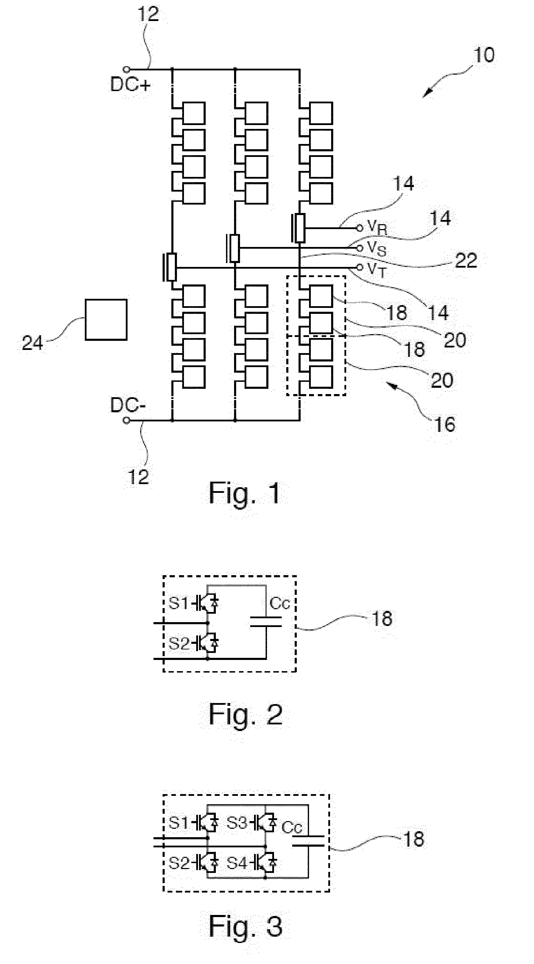

Fig.1 shows a schematic diagram of a power electronics device 10 in the form of a power converter 10. The power converter 10 has two DC voltage connections 12 or inputs 12, for example for connecting to a DC link, and three AC voltage connections 14 or outputs 14. Each AC voltage connection 14 is connected through a respective phase branch 16 to one of the DC voltage connections 12. The power converter 10 has an M2LC converter topology, i.e. each M2LC phase branch 16 comprises series connected power cells 18. Due to reasons of clarity, only one of the branches 16 and two of the power cells 18 are provided with reference numerals.

Fig. 1 shows a circuit portioning of the power converter 10. Each branch 16 of the power converter 10 comprises unipolar or bipolar power cells 18 that are connected in series.

Fig. 2 shows a M2LC unipolar cell 18 comprising two semiconductor switches, for example IGBTs, S1, S2 and a capacitor Cc. The unipolar cell 18 of Fig. 2 is adapted for generating and storing voltages with one polarity.

Fig. 3 shows a M2LC bipolar cell 18 comprising four semiconductor switches, for example IGBTs, S1, S2, S3, S4 and a capacitor Cc. The bipolar cell 18 of Fig. 3 is adapted for generating and storing voltages with two polarities.

Fig. 1 also shows the physical portioning of the power converter 10. Two power cells 18 of a branch 16 are combined to a power module 20. A power module 18 may be a replaceable component or device of the power converter 10. The components of the power module 18 may be mechanically fixed together on one board or within one housing.

Each power module 20 of the power converter 10 may comprise at least one M2LC power cell 18. The power modules 20 of a branch 16 of the power converter 10 are series connected through a bus bar 22. Due to reasons of clarity, only some of the power modules 20 of one branch 16 are provided with reference numerals.

The power converter 10 comprises a controller 24 for controlling the power converter 10, the power modules 20 and the power cells 18. The controller 24 is communicatively connected to each of the power modules 18 and controls the power modules 18 and its power cells 18 in such a way that a DC voltage at the connections 12 is converted into a three phase AC voltage at the connections 14.

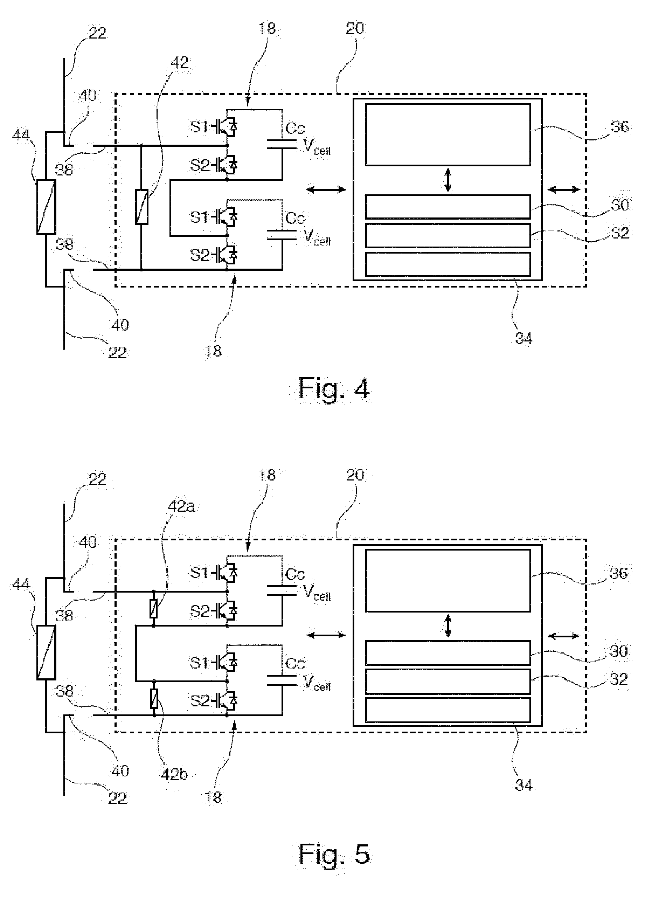

Fig. 4 schematically shows a power module 20 with two series connected power cells 18 and further infrastructure components like gate units 30, a local controller 32, an input/output interface 34 and an auxiliary power supply 36. The gate units 30 are adapted for controlling the power semiconductors S1, S2. The local controller 32 is adapted to control the power module 20 and its components 18, 30, 34, 36. The input/output interface 34 is adapted for data communication with the main controller 24 and with other input/output interfaces 34 of other power modules 20 of the power converter 10.

The auxiliary power supply 36 is adapted for supplying the power module 20 with electric power, independent of the cell voltage V_{cell}. When the power cells 18 of the power module 20 are operating, the power module 20 may be supplied with power from the power cells 18. When the power cells 18 are bypassed, the auxiliary power supply 36 may supply the power module 20 with power. The auxiliary power supply 36 may comprise an energy storage that is charged during normal mode operation of the power module 20 or may comprise an independent power connection to a power supply of the converter 10.

All components 18, 30, 32, 34, 36 of the power module 18 are mechanically fixed together to be commonly detached and attached to the power converter 10.

The power module has two terminals 38 to be connected to two terminals 40 of the bus bar 22.

The power module of Fig. 4 has one bypass element 42 for bypassing the power cells 18, which may be a mechanical switch 42 or a relais 42. The bypass element is adapted to short-circuit the terminals 40 of bus bar 22 and the terminals 38 of the power cell. Thus, the bypass element 42 may be seen as a bypass at module level. It has to be noted that the bypass element 42 or a further additional bypass element 44 may be situated on the side of the bus bar 22, such that the bus bar 22 may remain short-circuited, when the power module 20 is detached from the power converter 10.

Fig. 5 shows a further power module 22 with two bypass elements 42a, 42b at cell level. Each of the bypass elements 42a, 42b is adapted to bypass or short-circuit one of the power cells 18. When both bypass elements 42a, 42b are closed, the power module 20 is bypassed.

The bypass elements 42, 42a, 42b, 44 may be controlled by the local controller 32 of the power module 20. The bypass element 44 may be controlled by the main controller 24.

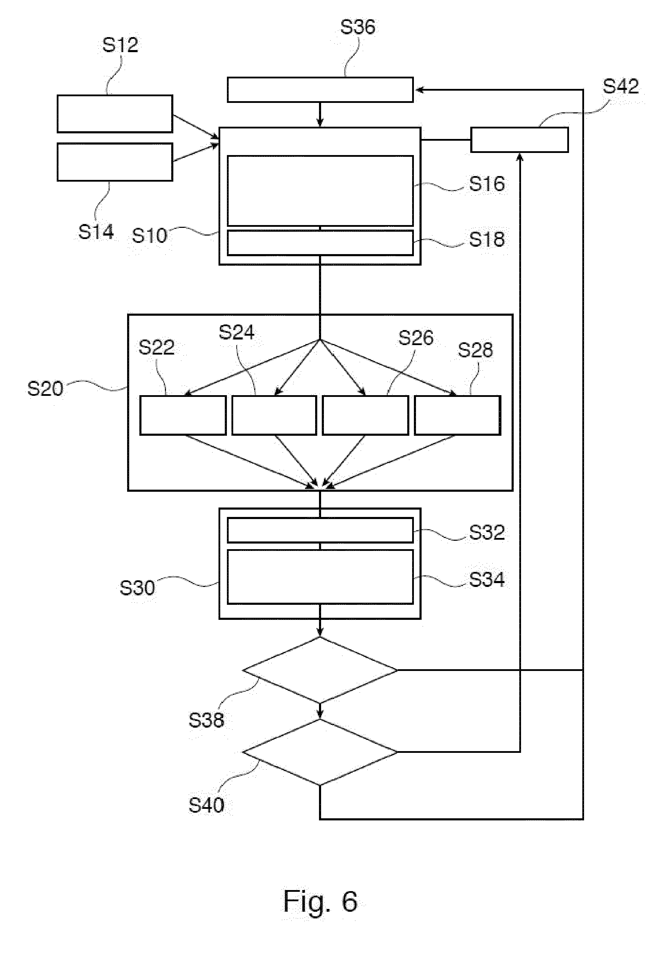

Fig. 6 shows a flow diagram for maintaining the power converter 10 and its power modules 20.

Step S10 is the transition to service mode of one power module 20. In step S10, the power module 20 is switched from a normal mode into the service mode. The transition to service mode may be operator triggered or may be automatically triggered.

For example, in step S12, a human operator may activate the transition to service mode by activating a switch or with a command via a HMI interface.

Alternatively, in step S14, the local controller 32 of power module 20 itself or the main controller 24 may activate the transition to service mode after a time-scheduled event.

Step S10 comprises the steps S16 and S18.

In step S16, the module voltage between the terminals 38 is ramped down and the cell capacitors Cc are discharged, for example under the control of the local controller 32. Furthermore, the branch voltage of the branch 16, the power module 20 belongs to, is redistributed to the remaining modules 20 of the branch 16. The branch voltage 16 is the variable AC voltage, the branch 16 should generated to generate the output AC voltage at the respective output 14.

In step S18, the module bypass element 42 (or the module bypass elements 42a, 2b) are activated, i.e. closed, for example by the local controller 32. Furthermore or alternatively, the bypass element 44 on the side of the bus bar 22 may be activated, for example by the main controller 24.

In step S18, the auxiliary power supply 36 may be activated.

Step S20 is the service mode operation of the power module 20. In the service mode during step S20 the bypass elements 42, 42a, 42b, 44 (or at least some of them) are activated and the terminals 38 of the power module 20 and/or the terminals 40 of the bus bar 22 are short-circuited.

Step S20 comprises steps S22 to S28 with service or maintenance actions. At least one of steps S22 to S24 may be performed during step S20. The service actions may be performed during the operation of the power converter 10, since the bus bar 22 is short-circuited and the other power modules 20 are continuing their operation.

In step S22, a module diagnostics of the power module 20 is performed, for example by the local controller 32.

In step S24, firmware and/or software of the power module 20 is upgraded or uploaded. For example, an operator may upload the new software or firmware into the components 30, 32, 34.

In step S26 the power module 20 is replaced. In this case, it may be necessary that the bypass element 44 is activated, such that the bus bar 22 remains short-circuited, when the power module 20 is detached from the bus bar 22. For example, a human operator may detach the power module 20 from the terminals 40 of the bus bar 22 and from the power converter 10 and may after that attach another power module 20.

In step S28, other service actions may be performed. For example, the power module 20 may be repaired by a human operator.

Step S30 is the transition to normal mode. In step S30, the power module 20 is switched from the service mode into the normal mode.

The transition to normal mode may be triggered by the end of the respective service action. For example, the module diagnostics function of step S22 may notify that the diagnostics have been performed or the main controller 24 may notify that respective software or firmware has been uploaded in step S22.

When the power module 20 is replaced, the local controller 32 or the main controller 24 may wait for the power module 20 to be attached to the bus bar 22. For example, a human operator may command the transition to normal mode via a HMI interface. After this command is received, the local controller 20 may start with the transition to normal mode.

Step S30 comprises the steps S32 and S34.

In step S32, the module bypass element 42 (or the module bypass elements 42a, 2b) are deactivated, i.e. opened, for example by the local controller 32. Furthermore or alternatively, the bypass element 44 on the side of the bus bar 22 may be deactivated, for example by the main controller 24.

In step S32, the auxiliary power supply 36 may be deactivated.

In step S34, the module voltage between the terminals 38 is ramped up and the cell capacitors Cc are charged, for example under the control of the local controller 32. Furthermore, the branch voltage of the branch 16, the power module 20 belongs to, is redistributed to all the power modules 20 of the branch 16, in particular to the power module 20 that has been maintained.

The method performed by the local controller 32 and/or the main controller 34 (with the help of a human operator in some cases) may be comprise a single module service mode and a sequential (full converter) service mode.

In either case, the maintained power module 20 is in the normal (operation) mode in step S36 after the transition to normal mode in steps S30. In the normal mode, during step S20 the bypass elements 42, 42a, 42b, 44 are deactivated, i.e. opened.

If, for example, the main controller 24 is in the sequential service mode (verified in step S38), the main controller 24 decides in step S40 whether a further power module 20 should be maintained. For example, the main controller 24 may perform maintenance for all power modules 20 of a branch 16 or for all power modules 20 of the power converter 10.

If a further power module 20 should be maintained, this is triggered, for example by the main controller in step S42. The transition to service mode in step S10 for a further power module 20 may be activated after a preceding maintained power module 10 has switched back into its normal mode.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference numeral in the claims should not be construed as limiting the scope.

## Claims

1. A method of maintaining a power module (20) of a power electronics device (10), the power electronics device (10) comprising a plurality of power modules (20), the method comprising:
switching to a service mode of the power module (20) by activating a bypass element (42) of the power module (20) such that the power module (20) is bypassed and by redistributing an operation voltage and/or current to other power modules (20) of the plurality of power modules (20);
performing a maintenance action on the power module (20);
switching to a normal mode of the power module (20) by deactivating the bypass element (42) and by redistributing the operation voltage and/or current back to the power module and the other power modules.

2. The method of claim 1,
wherein the maintenance action comprises at least one of executing a diagnostics function, uploading and/or downloading data, modifying data.

3. The method of claim 1 or 2,
wherein the maintenance action comprises waiting for the power module (20) to by replaced by a human operator.

4. The method of one of the preceding claims,
wherein the switching to the service mode is triggered by a human operator.

5. The method of one of the preceding claims,
wherein the switching to the service mode is automatically triggered.

6. The method of one of the preceding claims,
wherein the switching to the service mode comprises activating an auxiliary power supply (36);
wherein switching to the normal mode comprises deactivating the auxiliary power supply (36).

7. The method of one of the preceding claims,
wherein the power electronics device is a power converter (10);
wherein the plurality of power modules (20) are connected in series to form a branch (16) of the power converter;
wherein redistributing the operation voltage comprises redistributing a branch voltage of the branch of the power converter to the other power modules.

8. The method of one of the preceding claims,
wherein the power modules (20) of the plurality of power modules are electrically connected in series to a bus bar (22);
wherein activating the bypass element (42) comprises short-circuiting the bus bar (22), such that the other power modules remain connected in series.

9. A method for maintaining a power electronics device, comprising the step of:
sequentially performing the method of one of claims 1 to 6 for a plurality of power modules (20) of the power electronics device (10).

10. A computer program for maintaining a power module of a power converter, which, when being executed by at least one processor, is adapted to carry out the steps of the method of one of claims 1 to 9.

11. A computer-readable medium, in which a computer program according to claim 10 is stored.

12. A power module (20) for a power electronics device (10), the power module comprising:
at least one power cell (18) with power semiconductor switches and a power capacitor;
a local controller (32) for performing the method of one of the claims 1 to 9:
two terminals (38) for electrically connecting the at least one power cell (18) with a bus bar (22) of the power electronics device (10).

13. The power module (20) of claim 12,
wherein the power module comprises a bypass element (42) for short-circuiting the two terminals.

14. The power module (20) of claim 11,
wherein the power module (20) comprises at least two power cells (18) connected in series and at least two bypass elements (42a, 42b) for short circuiting each power cell (18).

15. A power converter (10), comprising:
at least one branch (16) of series connected power modules (20) according to one of claims 12 to 14;
a main controller (24) for controlling the power modules (20).
